# EUROPÄISCHE PATENTSCHRIFT

(11) **EP 1 987 901 B1**
(45) Veröffentlichungstag und Bekanntmachung des Hinweises auf die Patenterteilung: **13.08.2014**
(21) Anmeldenummer: 07012514.1
(22) Anmeldetag: 26.06.2007
(51) Int. Cl.: B23K 1/00, B23K 9/173, B23K 35/38

(54) **Verwendung eines Schutzgases zum Lichtbogenfügen, das Argon, Helium und Sauerstoff und/oder Kohlendioxid enthält**
Use of a protective gas for arc joining, the protective gas comprising Argon, Helium and Oxygen and/or Carbon dioxide
Utilisation d'un gaz protecteur pour l'assemblage par arc électrique, ce gaz comprenant de l'Argon, de l'Hélium et de l'Oxygène et/ou du dioxyde de Carbone

(30) Priorität: 04.05.2007 DE 102007021054
(43) Veröffentlichungstag der Anmeldung: 05.11.2008
(73) Patentinhaber: Linde AG, 80331 München (DE)
(72) Erfinder: Matz, Christoph, 85716 Unterschleissheim (DE)

(56) Entgegenhaltungen:
- EP-A- 1 186 368
- EP-A- 1 491 278
- EP-A- 1 757 401
- DE-A1- 19 748 351
- DE-A1- 19 849 510
- JP-A- 3 193 271

## Beschreibung

Die vorliegende Erfindung betrifft die Verwendung eines Schutzgases zum Lichtbogenfügen gemäß dem Oberbegriff des Anspruchs 1 (siehe, z.B., EP 1 491 278).

### Stand der Technik

Lichtbogenfügen unter Schutzgas ist eine häufig eingesetzte Fügetechnik, die insbesondere das Lichtbogenschweißen und das Lichtbogenlöten umfasst. Des Weiteren gehört zum Lichtbogenfügen auch das Verbinden von artverschiedenen Werkstoffen, wobei ein Werkstoff aufgeschmolzen wird, während der andere Werkstoff nur erwärmt wird.

Beim Lichtbogenschweißen brennt ein Lichtbogen zwischen einer in einem Brenner angeordneten Elektrode und dem zu bearbeitenden Werkstück. Eine Schweißverbindung entsteht hierbei durch Aufschmelzen des Grundwerkstoffs an der Bearbeitungsstelle im Lichtbogen und anschließende Wiedererstarrung des Werkstoffs.

Das Lichtbogenlöten unter Schutzgas ist eine Fügetechnik, die ebenfalls eine stoffschlüssige Verbindung mittels eines Lichtbogens schafft. Für die Verbindung wird jedoch nur der Zusatzwerkstoff aufgeschmolzen und nicht -wie beim Lichtbogenschweißen - Grundwerkstoff und Zusatzwerkstoff. Die Lötverbindung entsteht durch Verklammerung des Zusatzwerkstoffs mit dem Grundwerkstoff.

Beim Lichtbogenfügen unter Schutzgas wird der Zusatzwerkstoff meist in Form einer abschmelzenden Elektrode in die Verbindung eingebracht. Es ermöglicht unter anderem das Fügen von Dünnblechen, insbesondere von Blechen mit einer Stärke von bis zu etwa drei Millimetern.

Der Lichtbogen selbst ist ein Plasma aus ionisiertem Gas und Metalldampf in unterschiedlichen Anteilen. Hierdurch wirken die physikalischen Eigenschaften der zugeführten Schutzgase oder Prozessgase unmittelbar und schnell auf den Lichtbogen ein. Darüber hinaus kommen die zugeführten Schutzgase in Berührung mit dem heißen Werkstoff unter Bildung eines reaktionsfreudigen Bereichs, in dem zusätzlich die chemischen und metallurgischen Wirkungen der Gase wichtig sind.

Zum Metall-Schutzgas-Fügen wird häufig ein Schutzgas verwendet, das zusätzlich zur inerten Basis aus Argon oder aus Helium noch geringe Mengen aktiver Gase, beispielsweise Sauerstoff (O₂) oder Kohlendioxid (CO₂), enthält, um die Schweißverbindung entsprechend den besonderen technologischen Erfordernissen zu beeinflussen, wobei der Aktivgasanteil zum Beispiel für einen besseren Einbrand oder für eine geringere Oberflächenspannung der Schmelze sorgt. Das Inertgas, beispielsweise ein Edelgas(gemisch) aus Argon und/oder aus Helium, schützt das flüssige Metall unter dem Lichtbogen vor Oxidation.

Unter Anderem auch aus wirtschaftlichen Gründen haben sich beim M[etall-]S[chutz]G[as]-Fügen Mischgase aus Argon mit Sauerstoff und/oder mit Kohlendioxid durchgesetzt. Zunehmender Mechanisierungsgrad und vermehrter Einsatz der Impulstechnik machen Mischgase mit abgesenktem Sauerstoff- oder Kohlendioxid-Anteil immer beliebter. Weniger aktive Gase bewirken aber auch weniger Wärmeeintrag, was hinsichtlich Einbrand und hinsichtlich Schweißleistung nächteilig sein kann.

Um die Effizienz der Wärmeübertragung vom Lichtbogen zur Fügestelle bei niedrigaktiven Gasen zu erhöhen und um den Wirkungsgrad des Lichtbogens zu verbessern, wird dem Schutzgas Helium oder Wasserstoff beigemischt (vgl. Dokument "Leistung durch Innovation und Kompetenz. Die Linde Schweißschutzgase.", Bestell-Nr. 43385260 0805 - 1.5 Au).

Die Auswahl des beim Lichtbogenfügen zugeführten Schutzgases erfolgt üblicherweise nach
- den Anforderungen an die Schweißverbindung,
- der Arbeitsposition,
- der Art des Zusatzwerkstoffs,
- der Materialdicke und dem Oberflächenzustand der Grundwerkstoffe,
- dem Mechanisierungsgrad und
- der Lichtbogenart.

Beispielsweise ist aus der Druckschrift EP 1 321 218 A2 aus dem Stand der Technik die Verwendung eines Schutzgases zum Fügen einer artverschiedenen Verbindung aus zwei unterschiedlichen Werkstoffen bekannt, wobei das Schutzgas
- Aktivgas in einem Antellsbereich von 0,005 Volumenprozent (Vol.-%) bis 0,1 Vol.-%,
- Helium in einem Anteilsbereich von 10 Vol.-% bis 30 Vol.-% und
- Argon
aufweist.

Ferner ist in der Druckschrift EP 1 491 278 A2 aus dem Stand der Technik eine Gasmischung zum Metall-Schutzgas-Fügen (MSG-Fügen) mit wechselnder Polarität offenbart, wobei die Gasmischung Argon und/oder Helium sowie 0,1 Vol.-% bis 12 Vol.-% Sauerstoff und/oder 0,1 Vol.-% bis 12 Vol.-% Kohlendioxid aufweist.

Weiterhin ist aus der EP 1 757 401 ein Verfahren zum Schweißen mit Kurzlichtbogen mit 0,005 bis 0,5 Vol.-% Sauerstoff, Kohlendioxid, Stickstoffmonoxid, Stickstoff und/oder Distickstoffmonoxid in Argon oder in einer Argon-Helium-Mischung bekannt.

Auch aus der EP 1 186 368 ist ein Verfahren zum Lichtbogenschweißen von Nickelwerkstoffen mit 0,05 bis 0,5 Vol.-% Kohlendioxid in Argon oder Argon-Helium bekannt.

Ferner ist in der US 4973822 die Verwendung einer Mischung aus 0,5 bis 1,25 Vol.- % Kohlendioxid, 30 bis 40 Vol.-% Helium und Argon zum Lichtbogenschweißen mit abschmelzender Elektrode offenbart.

Die US 5083002 empfiehlt zum Lichtbogenschweißen eine Schutzgasmischung aus 0,1 bis 0,9 Vol.-% Kohlendioxid, 5 bis 13 Vol.-% Helium und Argon.

Zum Metall-Schutrgas-Schweißen (MSG-Schweißen) von unlegierten oder schwach legierten Dünnblechen wird meist ein Schutzgasgemisch aus Argon und zehn Prozent Kohlendioxid zugeführt. Dieses Schutzgas wird von der Firma Linde unter dem Markennamen CORGON 10 vertrieben.

Zum Metall-Schutzgas-Schweißen (MSG-Schweißen) von legierten, insbesondere hochlegierten, Dünnblechen wird hingegen üblicherweise ein Schutzgasgemisch aus Argon und 2,5 Prozent Kohlendioxid zugeführt. Dieses Schutzgas wird von der Firma Linde unter dem Markennamen CRONIGON 2 vertrieben.

Zum Metall-Schutzgas-Löten (MSG-Löten) wird hingegen meist reines Argon oder ein Gemisch aus Argon und einem Prozent Sauerstoff zugeführt. Dieses Schutzgas wird von der Firma Linde unter dem Markennamen CRONIGON S1 vertrieben.

Bei Schutzgasanwendungen, in denen mit unterschiedlichen Fügetechniken und/oder mit unterschiedlichen Materialien gearbeitet wird, ist eine derartige individuelle Gaszufuhr, bei der mehrere unterschiedliche Gasversorgungsschritte bereitgestellt werden müssen, jedoch zeit- und kostenintensiv.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzubilden, dass parallel und/oder nacheinander beliebige Lichtbogenfügetechniken, insbesondere M[etall-]S[chutz]G[as]-Schweißen und/oder M[etall-]S[chutz]G[as]-Löten, mit dem zugeführten Schutzgas durchführbar sind.

Diese Aufgabe wird durch ein Verfahren mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung auf dem Zuführen von Schutzgas mit reduziertem aktivem Anteil, zum Beispiel in Form von niedrigaktivem Mehrzweckgas, insbesondere für Dünnblechanwendungen und/oder für Lichtbogenfügetechniken in der Automobilindustrie.

Erfindungsgemäß weist das zugeführte Schutzgas
- Helium in einem Bereich von 25 Volumenprozent (Vol.-%) bis 28 Vol.-%,
- Kohlendioxid in einem Bereich von 0,75 Vol.-% bis 0,8 Vol.-% und
- im verbleibenden Volumenbereich Argon
auf,
wobei der Gegenstand eine Stärke von höchstens drei Millimetern aufweist, siehe Anspruch 1.

Dieses Schutzgas kann gleichzeitig und/oder nacheinander für verschiedene Lichtbogenfügetechniken, beispielsweise für Schweißanwendungen
- auf Basis von M[etall-]S[chutz]G[as]-Schweißen unlegierter oder hochlegierter Dünnbleche, insbesondere Stahlbleche, sowie
- auf Basis von M[etall-]S[chutz]G[as]-Löten beschichteter und/oder hochlegierter Dünnbleche, insbesondere Stahlbleche,
eingesetzt werden.

Das erfindungsgemäße Verfahren kann sowohl bei Fügevorgänge, welche mit Gleichstrom arbeiten, als auch bei mit Wechselstrom arbeitenden Fügevorgängen eingesetzt werden. Besonders bevorzugt ist es einsetzbar beim Lichtbogenfügen mit Gleichstrom.

Das Schutzgas weist, gemäß der Erfindung, 25 Vol.-% bis 28 Vol.-% Helium und 0,75 Vol.-% bis 0,8 Vol.-% Kohlendioxid auf.

Die vorliegende Erfindung ist insbesondere zum Einsatz für alle Schutzgasanwendungen der Automobilindustrie auf Blech mit einer Stärke bis zu etwa drei Millimeter (sogenanntes Dünnblech) geeignet.

Das erfindungsgemäße Verfahren hat den Vorteil, dass sowohl zum Metall-Schutzgas-Schweißen von unlegiertem Stahl oder von legiertem Stahl als auch zum Metall-Schutzgas-Löten eine zentrale Gasversorgung mit nur einem Gas erfolgt. Im Stand der Technik wird dagegen
- zum MSG-Schweißen von unlegiertem oder schwach legiertem Dünnblech eine Schutzgasgemisch aus Argon und zehn Prozent Kohlendioxid,
- zum MSG-Schweißen von legiertem, insbesondere hochlegiertem, Dünnblech eine Schutzgasgemisch aus Argon und 2,5 Prozent Kohlendioxid und
- zum Metall-Schutzgas-Löten reines Argon oder ein Gemisch aus Argon und einem Prozent Sauerstoff
zugeführt.

Da es sich beim vorliegenden Mehrzweckgas um ein Produkt handelt, das bei mehre ren Verfahren eingesetzt werden kann, ergeben sich in Abhängigkeit von der genauen Zusammensetzung für die verschiedenen Einsatzgebiete, insbesondere für verschiedene Materialien und/oder für verschiedene Dickenbereiche des Gegenstands, spezifische Vorteil.

Grundsätzlich liefert jedes der vorstehend genannten, erfindungsgemäß zuführbaren

Gase beim Lichbogenfügen gute Ergebnisse.

Kohlendioxid und Helium unterstützen den Wärmetransport und erzeugen einen tieferen Einbrand am Bauteil, was bei einem etwa drei Millimeter dicken Gegenstand gewünscht sein kann, für einen dünnen Gegenstand, beispielsweise für Bleche von etwa einem Millimeter Stärke, aber nicht erforderlich ist

Es hat sich gezeigt, dass selbst bei Dünnblechen mit bis zu etwa drei Millimetern Wanddicke ein erheblicher Unterschied in der Wärmeableitung zwischen dünnen und dicken Dünnblechen besteht. Immerhin liegt zwischen der gängigen minimalen Wanddicke von etwa 0,6 Millimetern und der gängigen maximalen Wanddicke von etwa drei Millimetern der Faktor fünf, was eine erheblich höhere Wärmeableitung bewirkt. Hier steuern ein höherer Kohlendioxid- und/oder Heliumanteil gegen.

Überraschenderweise werden beim erfindungsgemäßen Verfahren sowie bei der erfindungsgemäßen Verwendung im Vergleich zum Stand der Technik nicht nur unterschiedliche Gaszuführschritte eingespart, sondern auch verbesserte Fügeeigenschaften erzielt.

So wird im Vergleich zum Schutzgasgemisch aus Argon und zehn Prozent Kohlendioxid (Handelsname CORGON 10) beim erfindungsgemäß zugeführten Schutzgas weniger Schlacke gebildet und eine bessere Spaltüberbrückung erreicht, wobei zudem weniger Spritzer auftreten.

Im Vergleich zum Schutzgasgemisch aus Argon und 2,5 Prozent Kohlendioxid (Handelsname CRONIGON 2) werden beim erfindungsgemäß zugeführten Schutzgas weniger Oxidation und eine höhere Schweißgeschwindigkeit erreicht.

Ferner werden beim erfindungsgemäßen Verfahren im Vergleich zur Zufuhr von Argon oder einem Gemisch aus Argon und einem Prozent Sauerstoff (Handelsname CRONIGON S1) verbesserte Löteigenschaften erzielt, insbesondere eine höhere Lötgeschwindigkeit, weniger Spritzerauswurf, besseres Fließ- und Benetzungsverhalten sowie besseres Nahtaussehen.

## Patentansprüche

1. Verwendung eines Schutzgases, als niedrigaktives Mehrzweckgas zum Lichtbogenfügen, insbesondere zum M[etall-]S[chutz]G[as]-Schweißen und/oder zum M[etall-]S[chutz]G[as]-Löten, mindestens eines Gegenstands aus Metall und/oder aus mindestens einer Metalllegierung unter Schutzgas mit mindestens einer abschmelzenden Elektrode, **gekennzeichnet durch** das Schutzgas aufweisend
- Helium in einem Bereich von 25 Vol.-% bis 28 Vol.-%,
- Kohlendioxid in einem Bereich von 0,75 Vol.-% bis 0,8 Vol.-% und
- im verbleibenden Volumenbereich Argon, wobei der Gegenstand eine Stärke von höchstens drei Millimetem aufweist.

2. Verwendung gemäß Anspruch 1, **dadurch gekennzeichnet, dass** der Gegenstand mindestens ein Dünnblech ist.

3. Verwendung gemäß einem der Ansprüche 1 oder 2 in der Automobilindustrie.

## Claims

1. Use of a protective gas as a low-activity multipurpose gas for arc joining, in particular for M[etal] P[rotective] G[as] welding and/or for M[etal] P[rotective] G[as] soldering, at least one object made of metal and/or made of at least one metal alloy under protective gas using at least one melting electrode, **characterized by** the protective gas comprising
- helium in a range of from 25% by volume to 28% by volume,
- carbon dioxide in a range of from 0.75% by volume to 0.8% by volume, and
- argon in the remaining volume range,
wherein the object has a thickness of at most three millimetres.

2. Use according to Claim 1, **characterized in that** the object is at least one thin metal sheet.

3. Use according to either of Claims 1 and 2 in the automotive industry.

## Revendications

1. Utilisation d'un gaz protecteur comme gaz polyvalent faiblement actif pour l'assemblage à l'arc électrique, en particulier pour le soudage sous gaz protecteur avec métal d'apport et/ou pour le brasage sous gaz protecteur avec métal d'apport, d'au moins un objet en métal et/ou en au moins un alliage métallique sous gaz protecteur avec au moins une électrode consommable, **caractérisée par** le gaz protecteur contenant
- hélium, dans une plage de 25 % en volume à 28 % en volume,
- dioxyde de carbone dans une plage de 0,75 % en volume à 0,8 % en volume, et
- argon pour le reste du volume,
dans laquelle l'objet présente une épaisseur de trois millimètres au maximum.

2. Utilisation selon la revendication 1, **caractérisée en ce que** l'objet est au moins une tôle mince.

3. Utilisation selon l'une des revendications 1 ou 2 dans l'industrie automobile.
